# EUROPÄISCHE PATENTSCHRIFT

(11) **EP 3 557 357 B1**
(45) Veröffentlichungstag und Bekanntmachung des Hinweises auf die Patenterteilung: **31.05.2023**
(21) Anmeldenummer: 19163606.7
(22) Anmeldetag: 19.03.2019
(51) Int. Cl.: G05B 23/02

(54) **BETRIEBSÜBERWACHUNGSVERFAHREN**
OPERATION MONITORING METHOD
PROCÉDÉ DE SURVEILLANCE DE FONCTIONNEMENT

(30) Priorität: 18.04.2018 DE 102018205871
(43) Veröffentlichungstag der Anmeldung: 23.10.2019
(73) Patentinhaber: Robert Bosch GmbH, 70442 Stuttgart (DE)
(72) Erfinder: Bandemer, Bernd, Palo Alto, CA 94306 (US); Erkel, Steffen, 35638 Leun (DE); Koehler, Jan Mathias, 70199 Stuttgart (DE); Herve, Baptiste, 94140 Alfortville (FR); Ramakrishnan, Naveen, Wexford, PA 15090 (US)

(56) Entgegenhaltungen:
- EP-A1- 1 906 273
- EP-A1- 2 752 722
- EP-A1- 3 112 770
- US-A1- 2012 185 728

## Beschreibung

### Stand der Technik

Es sind bereits Betriebsüberwachungsverfahren zur Überwachung einer technischen Anlage, insbesondere einer Thermoanlage bekannt.

Die US2012/185728 offenbart das Diagnostizieren von Fehlern in Heizungs-, Lüftungs- und Klimaanlagen-Systemen mit mehreren Variablen.

Die EP2752722 offenbart die Überwachung der Zustände einer Anlage zur Früherkennung einer Anomalie auf der Grundlage mehrdimensionaler Zeitreihendaten.

### Offenbarung der Erfindung

Es wird ein Betriebsüberwachungsverfahren zur Überwachung einer technischen Anlage, insbesondere einer Thermoanlage, bei dem mittels einer Prognoseeinheit in zumindest einem Verfahrensschritt zumindest zwei erfasste Betriebsparameter zur Ermittlung eines Zukunftsparameters, insbesondere einer Wahrscheinlichkeit für das bevorstehende Auftreten eines Anlagefehlers, verarbeitet werden, vorgeschlagen. Unter einer "technischen Anlage" soll insbesondere ein mobiles und/oder stationäres Gerät oder eine Gruppe miteinander zusammenarbeitender Geräte verstanden werden. Vorzugsweise weist die technische Anlage zumindest eine elektronische Steuereinheit zu einer Durchführung eines Betriebsprogramms auf. Vorzugsweise steuert, insbesondere koordiniert, die Steuereinheit zumindest zwei Funktionseinheiten der technischen Anlage zu einer Erreichung unterschiedlicher Teilaufgaben der technischen Anlagen. Die Funktionseinheiten können Teil eines einzelnen Geräts sein und/oder auf mehrere Geräte der technischen Anlage verteilt sein. Vorzugsweise ist die technische Anlage als eine Thermoanlage zu einer Temperaturanpassung eines Mediums ausgebildet, wie beispielsweise als ein Durchlauferhitzer, als eine Heizungsanlage, als eine Klimaanlage oder dergleichen. Es ist aber auch denkbar, dass die technische Anlage als Fahrzeug, als Produktionsanlage, als Förderanlage, als Telefonanlage, als Haushaltsgerät, wie beispielsweise eine Waschmaschine, ein Trockner, ein Kühlschrank, ein Elektrowerkzeug, ein Computer, eine elektrische Zahnbürste oder als sonstige technische Anlage, insbesondere mit zumindest einer elektronischen Steuereinheit, ausgebildet ist.

Unter einer "Überwachung einer technischen Anlage" soll insbesondere eine Überprüfung eines Betriebs, insbesondere eines Betriebsablaufs, der technischen Anlage verstanden werden. Insbesondere wird bei einer Überwachung ein aktueller Betrieb der technischen Anlage auf eine Abweichung bezüglich eines vorgesehenen Betriebs der technischen Anlage überprüft. Bevorzugt wird die Überwachung zumindest im Wesentlichen regelmäßig, besonders bevorzugt bei jedem Betrieb der technischen Anlage, durchgeführt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Vorzugsweise werden in zumindest einem Verfahrensschritt der Prognoseeinheit Betriebsparameter der technischen Anlage zugeführt. Vorzugsweise werden mittels einer Kommunikationseinheit die Betriebsparameter von der Steuereinheit und/oder von einer Speichereinheit, insbesondere einer Protokolleinheit, der technischen Anlage abgefragt und/oder empfangen. Es ist auch denkbar, dass zumindest ein Betriebsparameter mittels einer Datenerfassungseinheit, insbesondere einer Sensoreinheit, aktiv erfasst und/oder gemessen wird. Unter einem "Betriebsparameter" soll ein Parameter verstanden werden, welcher einen Betrieb, insbesondere einen bestimmten Betriebszustand, der technischen Anlage charakterisiert und/oder zumindest teilweise beschreibt. Vorzugsweise ist ein Betriebsparameter als informationstechnische Kennzahl, beispielsweise als Betriebszustandsidentifizierungsgröße, Betriebskonfigurationsparameter, anlageninterner Übergabewert und/oder eine andere dem Fachmann als sinnvoll erscheinende Kennzahl ausgebildet. Es ist aber auch denkbar, dass zumindest ein Betriebsparameter als eine physikalische und/oder chemische Größe und/oder Kennziffer, beispielsweise als Betriebsdauer, als Betriebstemperatur, als Umgebungslufttemperatur, als Luftzahl, als Strömungszahl, als Druck, als Gaszufuhrmenge, als Stoffmischungsverhältnis, als Leistungsaufnahme oder dergleichen, und/oder als betriebstechnische und/oder produktionstechnische Größe, beispielsweise als Stückzahl, als Materialeffizienz, als Energieeffizienz, als Ausschussrate oder dergleichen, ausgebildet ist.

Unter einer "Prognoseeinheit" soll insbesondere eine Einheit mit einem Informationseingang, einer Informationsverarbeitung und einer Informationsausgabe verstanden werden. Vorzugsweise ist die Prognoseeinheit dazu vorgesehen, einen Zukunftsparameter zu berechnen. Unter einem "Zukunftsparameter" soll insbesondere eine Größe und/oder Kennziffer verstanden werden, welche einen in der Zukunft liegenden zu erwartenden Betrieb der technischen Anlage charakterisiert und/oder beschreibt. Beispielsweise ist der Zukunftsparameter als zu erwartender zukünftiger Wert zumindest eines Betriebsparameters ausgebildet. Beispielsweise ist der Zukunftsparameter als Wahrscheinlichkeit für den Ausfall zumindest eines Verschleißteils der technischen Anlage innerhalb eines Zeitraums ausgebildet. Vorzugsweise ermittelt die Prognoseeinheit den Zukunftsparameter durch Extrapolation eines zeitlichen Verlaufs zumindest eines Betriebsparameters und/oder eines zeitlichen Verlaufs einer von zumindest einem Betriebsparameter abgeleiteten Größe. Es ist auch denkbar, dass die Prognoseeinheit anhand eines mathematischen Models des Betriebs der technischen Anlage, insbesondere einer Lebensdauer einer Funktionseinheit der technischen Anlage, einen Zukunftsparameter ermittelt. Vorzugsweise werden zumindest zwei Betriebsparameter und/oder zumindest zwei Werte eines Betriebsparameters zu einem Zukunftsparameter verarbeitet.

Durch die erfindungsgemäße Ausgestaltung des Betriebsüberwachungsverfahrens kann vorteilhaft aus einem laufenden Betrieb einer technischen Anlage heraus eine Information über einen zu erwartenden zukünftigen Betrieb gewonnen werden. Insbesondere können vorteilhaft möglicherweise auftretende Fehler frühzeitig erkannt und/oder vorgebeugt werden. Insbesondere kann die Anzahl an Totalausfällen der technischen Anlage vorteilhaft gering gehalten werden.

Des Weiteren wird vorgeschlagen, dass in zumindest einem Verfahrensschritt eine Übermittlung der zumindest zwei erfassten Betriebsparameter über ein Datennetzwerk, insbesondere zu einer Auswertung der zumindest zwei erfassten Betriebsparameter, erfolgt. Unter einem "Datennetzwerk" soll zumindest eine zeitweise, bevorzugt ständige, elektronische, drahtlose und/oder leitungsgebundene Verbindung zwischen zumindest zwei Teilnehmern, insbesondere zwischen der Steuereinheit und der Prognoseeinheit, zu einem Austausch von Daten verstanden werden. Vorzugsweise sind die Teilnehmer indirekt über Netzwerkknoten, beispielsweise Server, Router, Gateways o. dgl. miteinander verbunden. Es ist aber auch vorstellbar, dass die Verbindung direkt ausgebildet ist, insbesondere über eine Standleitung, eine Funkverbindung und/oder Kopplung optischer Signale. Vorzugsweise ist das Datennetzwerk Teil eines größeren, insbesondere öffentlichen, Netzwerks, insbesondere des Internets. Es ist aber auch denkbar, dass das Datennetzwerk als unabhängiges, privates und/oder lokales Netzwerk ausgebildet ist. Vorzugsweise werden die zumindest zwei erfassten Betriebsparameter, insbesondere von der Steuereinheit und/oder einer Datenerfassungseinheit, an die Prognoseeinheit, insbesondere zu einer Auswertung der zumindest zwei erfassten Betriebsparameter, übermittelt. Es ist auch dankbar, dass die zumindest zwei erfassten Betriebsparameter über das Datennetzwerk an eine, insbesondere externe, Datenbank, insbesondere zu einer späteren Verarbeitung und/oder als Referenzwerte, übermittelt werden. Durch die erfindungsgemäße Ausgestaltung kann eine Auswertung vorteilhaft räumlich getrennt von einer technischen Anlage erfolgen. Insbesondere kann die technische Anlage in einer für die Auswertung, insbesondere die Prognoseeinheit, schädlichen Umgebung, beispielsweise aufgrund hoher Luftfeuchtigkeit, hoher Staubbelastung, extremer Temperaturen o. dgl., betrieben werden. Insbesondere kann das Datennetzwerk vorteilhaft einfach um weitere Teilnehmer, insbesondere weitere zu überwachende technische Anlagen, weitere Datenerfassungseinheiten, beispielsweise Wetterstationen zur Erfassung standortspezifischer Parameter, und/oder weitere Auswerteeinheiten, erweitert werden.

Weiter wird vorgeschlagen, dass in zumindest einem Verfahrensschritt eine Sequenz der zumindest zwei erfassten Betriebsparameter, insbesondere eine Sequenz von Betriebszustandsidentifizierungsgrößen eines durchlaufenen Betriebszustands, zu einem Analyseparameter, insbesondere zu einer Erfassung eines Betriebsablaufs der Thermoanlage, verarbeitet wird. Unter einer "Sequenz" soll zumindest eine geordnete Liste, vorzugsweise eine zeitliche Reihenfolge, von Sequenzelementen verstanden werden. Ein Sequenzelement umfasst vorzugsweise zumindest einen Wert zumindest eines Betriebsparameters und besonders bevorzugt zusätzlich einen Zeitparameter. Insbesondere gibt der Zeitparameter eine absolute Uhrzeit und/oder eine relative Zeit, beispielsweise bezogen auf den Start des Betriebs der technischen Anlage, an, zu welcher der Wert des Betriebsparameters angenommen wurde und/oder über welche Zeitspanne der Wert des Betriebsparameters im Wesentlichen konstant gehalten wurde. Unter "im Wesentlichen konstant" soll insbesondere, um weniger als eine anlagespezifische Maximalabweichung von einem Mittelwert und/oder Sollwert entfernt, verstanden werden. Vorzugsweise umfasst ein Sequenzelement als Betriebsparameter zumindest eine Betriebszustandsidentifizierungsgröße zu einer, insbesondere eindeutigen, Identifikation eines Betriebszustandes, der insbesondere von der technischen Anlage während eines Betriebs zu zumindest einem Zeitpunkt durchlaufen wurde. Erfindungsgemäß ist die Sequenz der zumindest zwei erfassten Betriebsparameter als ein Datenstrang über eine zeitliche Reihenfolge von durchlaufenen Betriebszuständen der technischen Anlage, insbesondere mit einer zugehörigen Betriebszustandsdauer, ausgebildet. Es ist insbesondere auch denkbar, dass ein Sequenzelement, insbesondere zusätzlich zu einer Betriebszustandsidentifizierungsgröße, weitere Betriebsparameter, insbesondere Betriebsparameter, die eine Funktionsweise des identifizierten Betriebszustands beschreiben, umfasst. Vorzugsweise wird die Sequenz, insbesondere mittels der Prognoseeinheit, in zumindest einem Verfahrensschritt ausgewertet. Erfindungsgemäß wird der Sequenz aufgrund der Auswertung zumindest ein Analyseparameter zugeordnet. Unter einem "Analyseparameter" soll insbesondere eine Kenngröße und/oder Kennzahl der Sequenz verstanden werden. Beispielsweise ist der Analyseparameter als Häufigkeit, insbesondere Häufigkeitsverteilung, ausgebildet, mit der ein Wert eines Betriebsparameters in der Sequenz vorkommt. Beispielsweise ist der Analyseparameter als Gesamtzeitdauer während eines Betriebszyklus, über die ein bestimmter Wert eines Betriebsparameters angenommen wird, ausgebildet. Beispielsweise ist der Analyseparameter als Wahrscheinlichkeit ausgebildet, dass nachfolgend und/oder vorrausgehend auf einen bestimmten Wert eines Betriebsparameters, ein anderer bestimmter Wert eines Betriebsparameters angenommen wird. Beispielsweise ist der Analyseparameter als Anzahl an und/oder als Intervallbreite von unterschiedlich angenommenen Werten eines Betriebsparameters ausgebildet. Bevorzugt werden einer Sequenz, insbesondere mittels der Prognoseeinheit, mehrere Analyseparameter zugeordnet. Durch die erfindungsgemäße Ausgestaltung kann vorteilhaft ein ausgeführter Betriebsablauf einer technischen Anlage anhand der zumindest zwei erfassten Betriebsparameter zumindest teilweise rekonstruiert werden. Insbesondere kann ein laufender Betrieb zu einem Informationsgewinn über einen zu erwartenden zukünftigen Betrieb analysiert werden.

Ferner wird vorgeschlagen, dass in zumindest einem Verfahrensschritt eine von einem zeitlichen Verlauf eines aus den zumindest zwei Betriebsparametern gewonnen Analyseparameters abhängige Steuergröße ausgegeben wird. Darunter, dass eine "Steuergröße ausgegeben wird", soll insbesondere verstanden werden, dass mittels der Prognoseeinheit ein, insbesondere elektrisches, Signal zur Steuerung oder Regelung einer weiteren Einheit, insbesondere einer Funktionseinheit der technischen Anlage, erzeugt wird. Beispielsweise kann die Prognoseeinheit in zumindest einem Verfahrensschritt eine Benutzerschnittstelle zu einer Informationsausgabe, insbesondere zu einer Ausgabe zumindest eines Zukunftsparameters und/oder zumindest eines Analyseparameters, ansteuern. Beispielsweise kann die Prognoseeinheit in zumindest einem Verfahrensschritt eine Steuergröße an die Steuereinheit der technischen Anlage senden, insbesondere zu einer Anpassung eines Betriebs der technischen Anlage, insbesondere zur Anpassung eines Betriebsparameters, beispielsweise zur Drosselung des Betriebs und/oder zur Kompensation eines aufgetretenen Fehlers. Vorzugsweise ist die Steuergröße zumindest abhängig von einem Analyseparameter, welcher aus den zumindest zwei erfassten Betriebsparametern gewonnen, insbesondere berechnet, wurde. Bevorzugt ist die Steuergröße abhängig von einem zeitlichen Verlauf des Analyseparameters. Insbesondere wird in zumindest einem Verfahrensschritt, insbesondere mittels der Prognoseeinheit, zumindest ein aktueller Trend eines Analyseparameters ermittelt. Durch die erfindungsgemäße Ausgestaltung des Betriebsüberwachungsverfahrens kann insbesondere eine Anzahl an falsch-positiven Fehlerwarnungen aufgrund von kurzfristigen Betriebsparameter- und/oder Analyseparameterschwankungen vorteilhaft gering gehalten werden. Insbesondere kann anhand eines Trends vorteilhaft eine Fehlentwicklung eines Betriebs frühzeitig, insbesondere vor einem Erreichen eines Schwellenwerts, erkannt werden.

Des Weiteren wird vorgeschlagen, dass in zumindest einem Verfahrensschritt Untersequenzen einer Sequenz zumindest zwei verschiedenen Funktionseinheiten der technischen Anlage, insbesondere der Thermoanlage, zugeordnet werden und abhängig von einer dadurch bedingten Zuordnung zumindest eine Steuergröße ausgegeben wird. Unter einer "Untersequenz einer Sequenz" soll insbesondere eine Teilmenge von Sequenzelementen, aus welchen die Sequenz aufgebaut und/oder zusammengesetzt ist, verstanden werden. Insbesondere kann eine Untersequenz, die eine selbe Ordnung, insbesondere eine Zeitordnung, wie die Sequenz aufweist, lückenlos zusammenhängend und/oder Lücken aufweisend ausgebildet sein. Bevorzugt wird an einer bestimmten Untersequenz und/oder einer Gruppe von Untersequenzen mit einem gemeinsamen charakteristischen Merkmal eine Funktionseinheit der technischen Anlage Erfindungsgemäß wird in zumindest einem Verfahrensschritt, insbesondere mittels der Prognoseeinheit, die Sequenz nach zuvor festgelegten Untersequenzen durchsucht. Insbesondere wird in zumindest einem Verfahrensschritt durch ein Vorhandensein, ein Fehlen, eine Position und/oder einer Veränderung der Untersequenz, beispielsweise fehlende und/oder zusätzliche Sequenzelemente innerhalb der Untersequenz, in der Sequenz auf einen regulären Betrieb und/oder auf ein fehlerhaftes Verhalten der Funktionseinheit geschlossen. Vorzugsweise ist eine Zuordnung der Funktionseinheit zu der Untersequenz eindeutig. Es ist aber auch vorstellbar, dass mehrere Funktionseinheiten der gleichen Untersequenz zugeordnet sind. Insbesondere wird die Sequenz nach einer Untersequenz durchsucht, die unabhängig von zumindest einer Funktionseinheit der technischen Anlage ist. Vorzugsweise werden durch die Suche nach Untersequenzen in der Sequenz zumindest zwei unterschiedliche Funktionseinheiten erkannt. Durch die erfindungsgemäße Ausgestaltung kann vorteilhaft eine Fehleranalyse eines Betriebs, insbesondere eines Betriebsablaufs, einer technischen Anlage durchgeführt werden. Insbesondere kann zumindest die Anzahl der möglichen Fehlerquellen vorteilhaft gering gehalten werden. Insbesondere kann ein Fehler vorteilhaft schnell gefunden werden.

Weiterhin wird vorgeschlagen, dass in zumindest einem Verfahrensschritt zumindest zur Erzeugung zumindest einer Steuergröße für eine Funktionseinheit der technischen Anlage, insbesondere der Thermoanlage, ein erfasster weiterer Betriebsparameter einer weiteren, insbesondere baugleichen, Anlage verarbeitet wird. Vorzugsweise tauscht die Prognoseeinheit in zumindest einem Verfahrensschritt Daten, insbesondere die erfassten Betriebsparameter, der erfasste weitere Betriebsparameter, Sequenzen von Betriebsparametern, der Analyseparameter und/oder standortspezifische Parameter, zwischen der technischen Anlage und der weiteren Anlage aus. Besonderes bevorzugt tauscht die Prognoseeinheit Daten mit einer Vielzahl an weiteren, insbesondere baugleichen, Anlagen aus. Es ist auch vorstellbar, dass die Prognoseeinheit Daten mit einer weiteren Prognoseeinheit der weiteren Anlage austauscht. Insbesondere wird zumindest der erfasste weitere Betriebsparameter von der Prognoseeinheit abgerufen und/oder empfangen. Vorzugsweise wird der erfasste weitere Betriebsparameter von der Prognoseeinheit verarbeitet. Insbesondere wird der erfasste weitere Betriebsparameter zur Bildung einer Referenz verarbeitet, insbesondere zu einer Erkennung eines fehlerhaften und/oder ineffizienten Betriebs der technischen Anlage. Beispielsweise wird der erfasste weitere Betriebsparameter zum Anlernen einer maschinellen Lerneinheit verwendet. Beispielsweise wird der erfasste weitere Betriebsparameter zu einem Mittelwert, einem Schwellenwert, einer zulässigen Abweichung o. dgl. verarbeitet. Durch die erfindungsgemäße Ausgestaltung kann auf eine vorteilhaft große Datenmenge über den Betrieb, insbesondere baugleicher, technischer Anlagen zugegriffen werden. Es können vorteilhaft genau Bereiche für Betriebsparameter bestimmt werden, bei denen die technische Anlage störungsfrei betrieben werden kann.

Darüber hinaus wird vorgeschlagen, dass in zumindest einem Verfahrensschritt zumindest der erfasste weitere Betriebsparameter über ein Datennetzwerk ausgetauscht wird. Vorzugsweise sind die technische Anlage, die weitere technische Anlage und die Prognoseeinheit Teilnehmer des Datennetzwerks. Vorzugsweise übermittelt die technische Anlage zumindest die zwei erfassten Betriebsparameter über das Datennetzwerk an die Prognoseeinheit. Bevorzugt übermittelt die weitere technische Anlage zumindest den erfassten weiteren Betriebsparameter über das Datennetzwerk an die Prognoseeinheit. Vorzugsweise wird, insbesondere zusätzlich zu dem erfassten weiteren Betriebsparameter, zumindest ein standortspezifischer Parameter, über das Datennetzwerk an die Prognoseeinheit übermittelt, insbesondere zu einer Gewichtung und/oder Bewertung des erfassten weiteren Betriebsparameters. Durch die erfindungsgemäße Ausgestaltung kann insbesondere eine vorteilhaft hohe, insbesondere ständige, Verfügbarkeit von zumindest einem erfassten weiteren Betriebsparameter sichergestellt werden. Insbesondere kann die Erzeugung zumindest einer Steuergröße vorteilhaft schnell anhand des erfassten weiteren Betriebsparameters angepasst werden. Insbesondere können vorteilhaft kurzfristige Schwankungen der erfassten Betriebsparameter, beispielsweise aufgrund einer sich ändernden Wetterlage und/oder aufgrund von Unregelmäßigkeiten in einem Versorgungsnetzwerk, insbesondere Elektrizität, Wasser und/oder Gas, bei einer Fehlererkennung berücksichtigt werden.

Ferner wird vorgeschlagen, dass in zumindest einem Verfahrensschritt anhand eines Analyseparameters, insbesondere mittels einer maschinellen Lerneinheit, eine Bewertung einer Sequenz der zumindest zwei Betriebsparameter bezüglich einer Regularität des Betriebs stattfindet. Bevorzugt ist ein Betrieb einer technischen Anlage als regulär anzusehen, wenn ein vorgesehenes Resultat des Betriebs mit einer vorgesehenen Effizienz, beispielsweise bezüglich Zeit, Energie, Material o. dgl., erreicht wird. Vorzugsweise soll ein Betrieb als irregulär angesehen werden, wenn ein vorgesehenes Resultat mit geringerer Effizienz als vorgesehen erreicht wird und/oder wenn bei einer vorgesehenen Effizienz eine Effektivität des Betriebs der technischen Anlage geringer ausfällt als vorgesehen, beispielsweise aufgrund eines Verschleißes zumindest einer Funktionseinheit und/oder aufgrund von Schwankungen in den Umgebungsbedingungen wie Lufttemperatur. Insbesondere soll ein Betrieb als fehlerhaft angesehen werden, wenn eine Effizienz und/oder eine Effektivität eines Betriebs der technischen Anlage unter einen anlagespezifischen Schwellenwert fallen/fällt, beispielsweise aufgrund eines Ausfalls zumindest einer Funktionseinheit. Vorzugsweise wird in zumindest einem Verfahrensschritt eine Sequenz der zumindest zwei Betriebsparameter, insbesondere anhand des Analyseparameters, in zumindest eine der Bewertungskategorien regulär oder irregulär eingeordnet. Vorzugsweise wird ein Betrieb der technischen Anlage als fehlerhaft bewertet, wenn ein Schwellenwert für die Anzahl an irregulären Sequenzen, insbesondere relativ zur Anzahl an regulären Sequenzen, pro Zeiteinheit, beispielsweise pro Tag, pro Monat und/oder pro Jahr, überschritten wird. Vorzugsweise wird die Bewertung mittels einer maschinellen Lerneinheit, beispielsweise einem neuronalen Netz, vorgenommen. Unter einer "maschinellen Lerneinheit" soll insbesondere eine Recheneinheit verstanden werden, die anhand von Beispieldaten selbsttätig charakteristische Merkmale erkennt, sowie darauf begründet verallgemeinerte Bewertungsregeln und/oder Schwellenwerte erstellt. Bevorzugt wird die maschinelle Lerneinheit in zumindest einem Verfahrensschritt zu einem überwachten Lernen mit künstlich erzeugten und/oder bereits zuvor als regulär erkannten, beispielsweise durch einen Benutzer, Sequenzen angelernt. Insbesondere werden Sequenzen mit maximal und/oder minimal zulässigen Werten für die Betriebsparameter als Beispieldaten zur Verfügung gestellt. Es ist aber auch denkbar, dass zu einem un-überwachten Anlernen als Beispieldaten als regulär angenommene Sequenzen einer technischen Anlage, beispielsweise aus einem Zeitraum nach einer ersten Inbetriebnahme der technischen Anlage, genutzt werden. Durch die erfindungsgemäße Ausgestaltung kann vorteilhaft eine, insbesondere relative, Zunahme von irregulären Sequenzen festgestellt werden. Insbesondere kann eine nachlassende Effektivität und/oder Effizienz der technischen Anlage vorteilhaft früh erkannt werden. Insbesondere können Gegenmaßnahmen vorteilhaft vor einem fehlerhaften Betrieb, insbesondere einem Totalausfall, der technischen Anlage ergriffen werden.

Weiterhin wird vorgeschlagen, dass in zumindest einem Verfahrensschritt zumindest basierend auf den zumindest zwei erfassten Betriebsparametern zumindest ein technischer Schwellenwert bestimmt wird, insbesondere durch die maschinelle Lerneinheit. Insbesondere ergeben sich maximal und minimal zulässige Betriebsparameterwerte aus einer Schwankungsbreite der erfassten Betriebsparameter. Vorzugsweise wird bei einem ermittelten technischen Schwellenwert ein Sicherheitsfaktor berücksichtigt. Bevorzugt wird ein technischer Schwellenwert automatisch von der maschinellen Lerneinheit bestimmt. Insbesondere wird zumindest ein technischer Schwellenwert in einer Einlernphase der Lerneinheit bestimmt. Vorzugsweise passt die Lerneinheit einen technischen Schwellenwert in zumindest einem Verfahrensschritt, insbesondere nach einem fehlerhaften Betrieb, an. Alternativ oder zusätzlich werden Schwellenwerte aus einer Schwankungsbreite einer Sammlung historischer Betriebswerte der technischen Anlage bestimmt. Es ist auch denkbar, dass ein technischer Schwellenwert werkseitig, insbesondere aufgrund von historischen Betriebswerten vergleichbarer technischer Anlagen, fest vorgegeben wird. Durch die erfindungsgemäße Ausgestaltung kann ein Schwellenwert vorteilhaft anlagespezifisch ausgestaltet werden. Insbesondere können bei einer Schwellenwertbestimmung vorteilhaft standortspezifische Parameter, wie beispielsweise Luftfeuchtigkeit, Luftdruck o. dgl., individuell für einzelne technische Anlagen berücksichtigt werden.

Darüber hinaus wird vorgeschlagen, dass in zumindest einem Verfahrensschritt zumindest zwei Funktionseinheiten der technischen Anlage, insbesondere der Thermoanlage, unterschiedliche Untersequenzen zugeordnet werden. Insbesondere wird in zumindest einem Verfahrensschritt nach einem fehlerhaften Betrieb der technischen Anlage eine Sequenz, insbesondere mittels der Prognoseeinheit, auf unbekannte Untersequenzen hin analysiert, insbesondere zu einem zukünftigen frühzeitigen Erkennen des fehlerhaften Betriebs. Vorzugsweise wird in zumindest einem Verfahrensschritt zumindest eine Fehlerkenngröße, insbesondere eine Art des aufgetretenen Fehlers und/oder eine Identifikationsgröße einer fehlerhaften Funktionseinheit, durch die Prognoseeinheit abgefragt. Insbesondere fragt die Prognoseeinheit die Fehlerkenngröße, beispielsweise von einem Benutzer, insbesondere von einem Wartungstechniker, mittels einer Benutzereingabe, ab. Es ist aber auch denkbar, dass die Prognoseeinheit die unbekannten Untersequenzen zu einem Abgleich an eine weitere Prognoseeinheit und/oder eine zentrale Datenbank sendet. Bevorzugt werden die unbekannten Untersequenzen mittels der Fehlerkenngröße einer Funktionseinheit zugeordnet. Alternativ oder zusätzlich, insbesondere wenn eine Fehlerkenngröße unbekannt ist, werden die in Frage kommenden Untersequenzen einer allgemeinen Funktionsstörung zugeordnet. Vorzugsweise wird eine Sequenz eines zukünftigen Betriebs auf die unbekannten Untersequenzen hin durchsucht, insbesondere automatisch durch die maschinelle Lerneinheit. Vorzugsweise werden werksseitig, insbesondere im Rahmen einer Einlernphase der maschinellen Lerneinheit, zumindest zwei Funktionseinheiten zumindest je einer Untersequenz, insbesondere reguläre Untersequenzen und/oder irreguläre Untersequenzen mit bekannter Fehlerkenngröße, zugeordnet. Durch die erfindungsgemäße Ausgestaltung kann ein Umfang der Fehlerdiagnose vorteilhaft einfach erweiterbar, insbesondere gegenüber einem Wissenstand und/oder einer Erwartungshaltung bei einer Fertigung der Prognoseeinheit, ausgebildet werden.

Weiter wird ein Betriebsüberwachungssystem mit zumindest einer Prognoseeinheit, insbesondere einer maschinellen Lerneinheit, zur Durchführung eines erfindungsgemäßen Betriebsüberwachungsverfahrens, vorgeschlagen. Vorzugsweise weist die Prognoseeinheit zumindest einen Prozessor, einen Speicher, Ein- und Ausgabeeinheiten, weitere elektrische Bauteile, ein Betriebsprogramm, Regelroutinen, Steuerroutinen und/oder Berechnungsroutinen auf. Bevorzugt umfasst das Betriebsüberwachungssystem zumindest eine Kommunikationseinheit zu einer Kommunikation zwischen der Prognoseeinheit und der technischen Anlage, insbesondere zu einer Kommunikation über das Datennetzwerk. Alternativ oder zusätzlich weist das Betriebsüberwachungssystem eine Datenerfassungseinheit, insbesondere einer Sensoreinheit, zu einem Erfassen eines Betriebsparameters der technischen Anlage auf. Insbesondere umfasst die Prognoseeinheit eine maschinelle Lerneinheit. Es ist aber auch vorstellbar, dass die maschinelle Lerneinheit eigenständig ausgebildet ist und insbesondere über das Datennetzwerk mit der Prognoseeinheit Daten austauscht. Durch die erfindungsgemäße Ausgestaltung des Betriebsüberwachungssystems kann vorteilhaft ein laufender Betrieb einer technischen Anlage vorteilhaft sicher überwacht werden, insbesondere um einen zuverlässigen Betrieb der technischen Anlage über eine zumindest im Wesentlichen gesamte Lebensdauer der technischen Anlage realisieren zu können.

Ferner wird eine technische Anlage, insbesondere eine Thermoanlage, mit einem erfindungsgemäßen Betriebsüberwachungssystem vorgeschlagen. Vorzugsweise umfasst die technische Anlage, insbesondere die Thermoanlage, zumindest zwei Funktionseinheiten, beispielsweise eine Lüftereinheit, eine Gaszufuhreinheit, eine Zündeinheit, eine Flammendetektoreinheit, eine Brennkammereinheit, eine Wärmeaustauscheinheit, eine Gehäuseeinheit, eine Steuereinheit oder dergleichen. Vorzugsweise weist die technische Anlage zumindest eine elektronische Steuereinheit zur Durchführung eines Betriebsprogramms auf. Vorzugsweise ist das Betriebsüberwachungssystem räumlich getrennt von anderen Funktionseinheiten der technischen Anlage ausgebildet. Insbesondere tauscht das Betriebsüberwachungssystem mit einer Funktionseinheit der technischen Anlage, insbesondere mit der Steuereinheit und/oder einer Speichereinheit, Daten, insbesondere die Betriebsparameter und/oder die Steuergröße, über das Datennetzwerk aus. Es ist aber auch denkbar, dass das Betriebsüberwachungssystem in eine Funktionseinheit, insbesondere in eine Gehäuseeinheit, der technische Anlage integriert ist. Durch die erfindungsgemäße Ausgestaltung kann vorteilhaft eine zuverlässige technische Anlage erreicht werden.

Das erfindungsgemäße Betriebsüberwachungsverfahren, das erfindungsgemäße Betriebsüberwachungssystem und/oder die erfindungsgemäße technische Anlage sollen/soll hierbei nicht auf die oben beschriebene Anwendung und Ausführungsform beschränkt sein. Insbesondere kann das erfindungsgemäße Betriebsüberwachungsverfahren, das erfindungsgemäße Betriebsüberwachungssystem und/oder die erfindungsgemäße technische Anlage zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen technische Anlage mit einem erfindungsgemäßen Überwachungssystem,
- Fig. 2: ein typisches Zustandsdiagramm am Beispiel einer Thermoanlage,
- Fig. 3: ein Flussdiagramm des erfindungsgemäßen Betriebsüberwachungsverfahrens,
- Fig. 4: eine typische Sequenz eines Betriebsablaufs der Thermoanlage und
- Fig. 5: eine weitere typische Sequenz eines Betriebsablaufs der Thermoanlage.

### Beschreibung des Ausführungsbeispiels

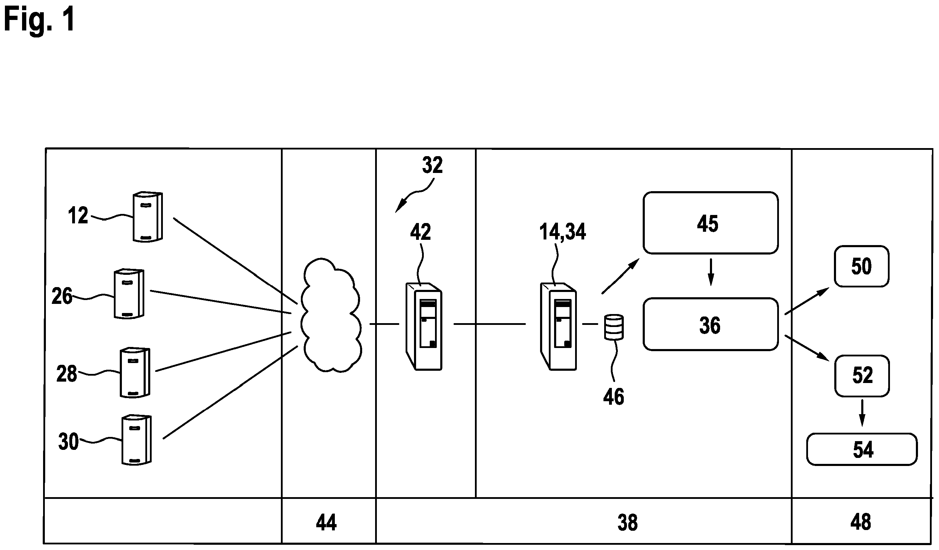

Figur 1 zeigt eine technische Anlage 12, insbesondere eine Thermoanlage, mit einem Betriebsüberwachungssystem 38. Vorzugweise weist die technische Anlage 12 zumindest zwei Funktionseinheiten auf. Beispielsweise ist die technische Anlage 12 als Thermoanlage, insbesondere als Durchlauferhitzer ausgebildet. Vorzugsweise umfasst die als Thermoanlage ausgebildete technische Anlage 12 zumindest eine als Lüfter ausgebildete Funktionseinheit. Vorzugsweise umfasst die als Thermoanlage ausgebildete technische Anlage 12 zumindest eine als Gaszufuhr, insbesondere mit einem Gasventil, ausgebildete Funktionseinheit. Vorzugsweise umfasst die als Thermoanlage ausgebildete technische Anlage 12 zumindest eine als Zündeinheit, insbesondere mit einer Funkenzündung, ausgebildete Funktionseinheit. Vorzugsweise umfasst die als Thermoanlage ausgebildete technische Anlage 12 zumindest eine als Flammendetektor ausgebildete Funktionseinheit. Vorzugsweise umfasst die als Thermoanlage ausgebildete technische Anlage 12 zumindest eine als Brennkammer ausgebildete Funktionseinheit. Vorzugsweise umfasst die als Thermoanlage ausgebildete technische Anlage 12 zumindest eine als Steuereinheit ausgebildete Funktionseinheit, zu einer Durchführung eines Betriebsprogramms.

Das Betriebsüberwachungssystem 38 weist zumindest eine Prognoseeinheit 14, insbesondere eine maschinellen Lerneinheit 34, zur Durchführung eines Betriebsüberwachungsverfahrens 10 auf. Vorzugsweise weist das Betriebsüberwachungssystem 38 eine Speichereinheit 46 auf. Vorzugsweise ist die Speichereinheit 46 dazu vorgesehen historische Betriebsparameter der technischen Anlage 12 und/oder aus den Betriebsparametern gewonnene historische Analyseparameter zu speichern. Insbesondere ist die Speichereinheit 46 dazu vorgesehen von der maschinellen Lerneinheit 34 erzeugte Parameter, beispielsweise anlagespezifische technische Schwellenwerte, zu speichern. Insbesondere sind an das Betriebsüberwachungssystem 38 weitere technische Anlagen 26, 28, 30 über ein Datennetzwerk 32 angeschlossen. Vorzugsweise erfolgt eine Kommunikation über das Datennetzwerk 32 indirekt über Netzwerkknoten, wie Router und/oder Server 42. Die Netzwerkknoten können dabei als externe Einheiten, als Teil des Betriebsüberwachungssystems 38 und/oder als weitere Funktionseinheit der technischen Anlage 12 ausgebildet sein. Es ist insbesondere auch denkbar, dass das Betriebsüberwachungssystem 38 und/oder einzelne Bestandteile des Betriebsüberwachungssystems 38, beispielsweise die Speichereinheit 46, räumlich getrennt von anderen Funktionseinheiten der technischen Anlage 12 ausgebildet sind/ist und insbesondere mit einer Funktionseinheit der technischen Anlage 12 über das Datennetzwerk 32 kommunizieren/kommuniziert. Vorzugsweise tauscht das Betriebsüberwachungssystem 38 und/oder einzelne Bestandteile des Betriebsüberwachungssystems 38 Daten mit einer Funktionseinheit der technischen Anlage 12 und/oder mit einer weiteren technischen Anlage 26, 28, 30 über ein, insbesondere öffentliches, Datennetzwerk 44, insbesondere das Internet, aus. Alternativ ist es auch denkbar, dass ein Datenaustausch über ein privates Netzwerk, eine direkte Standleitung, eine Funkverbindung, eine Satellitenverbindung oder eine andere dem Fachmann als sinnvoll erscheinende Datenverbindung realisiert wird. Es ist auch vorstellbar, dass das Betriebsüberwachungssystem 38 im Wesentlichen vollständig in die technische Anlage 12 integriert ist, zu einem, insbesondere von dem Datennetzwerk 32, autarken Betrieb.

In dem Betriebsüberwachungsverfahren 10 wird zur Überwachung der technischen Anlage 12, insbesondere der Thermoanlage, mittels der Prognoseeinheit 14 in zumindest einem Verfahrensschritt zumindest zwei erfasste Betriebsparameter zur Ermittlung eines Zukunftsparameters, insbesondere einer Wahrscheinlichkeit für das bevorstehende Auftreten eines Anlagefehlers, verarbeitet. Bevorzugt erfolgt in zumindest einem Verfahrensschritt eine Übermittlung der zumindest zwei erfassten Betriebsparameter über das Datennetzwerk 32, insbesondere zu einer Auswertung der zumindest zwei erfassten Betriebsparameter. Insbesondere ist die Prognoseeinheit 14 dazu vorgesehen, eine Analyse 45 der zumindest zwei erfassten Betriebsparameter, vorzugsweise einer Sequenz von Betriebsparametern, durchzuführen. Vorzugsweise ist die Prognoseeinheit 14, insbesondere die maschinelle Lerneinheit 34, dazu vorgesehen eine Bewertung 36 eines Betriebs der technischen Anlage 12 anhand des durch die Analyse 45 gewonnen Analyseparameters durchzuführen. Insbesondere wird aus einer zeitlichen Entwicklung des Analyseparameters und/oder aus einem Vergleich mit Schwellenwerten der Betrieb der technischen Anlage 12 kategorisiert. Vorzugsweise wird in zumindest einem Verfahrensschritt eine von einem zeitlichen Verlauf eines aus den zumindest zwei Betriebsparametern gewonnenen Analyseparameters abhängige Steuergröße ausgegeben, insbesondere zu einer Steuerung einer Funktionseinheit der technischen Anlage 12. Vorzugsweise wird zumindest eine Benutzerschnittstelle 48 zu einer Informationsausgabe über die Bewertung 36 und/oder über den Analyseparameter angesteuert. Die Benutzerschnittstelle 48 umfasst vorzugsweise zumindest ein Display, einen Monitor, eine Kontrollleuchte, eine Audioausgabe oder sonstige dem Fachmann als sinnvoll erscheinende Ausgabeelemente. Vorzugsweise weist die Benutzerschnittstelle 48 zumindest ein Erfolgsausgabeelement 50 zur Anzeige eines einwandfreien Betriebs der technischen Anlage 12 auf. Vorzugsweise weist die Benutzerschnittstelle 48 zumindest ein Fehlerausgabeelement 52 zur Anzeige eines fehlerhaften Betriebs der technischen Anlage 12 auf. Vorzugsweise weist die Benutzerschnittstelle 48 zumindest ein Ausgabeelement 54 zur Anzeige einer möglichen Fehlerursache der technischen Anlage 12 auf. Vorzugsweise ist die Benutzerschnittstelle 48 eine Funktionseinheit der technischen Anlage 12. Zusätzlich oder alternativ ist die Benutzerschnittstelle 48 als Teil des Betriebsüberwachungssystems 38 ausgebildet. Es ist auch denkbar, dass das Überwachungssystem eine Kommunikationseinheit ansteuert um eine Verbindung über ein Telekommunikationsnetz mit einer externen Benutzerschnittstelle, beispielsweise Mobiltelefone, Pager oder dergleichen, herzustellen.

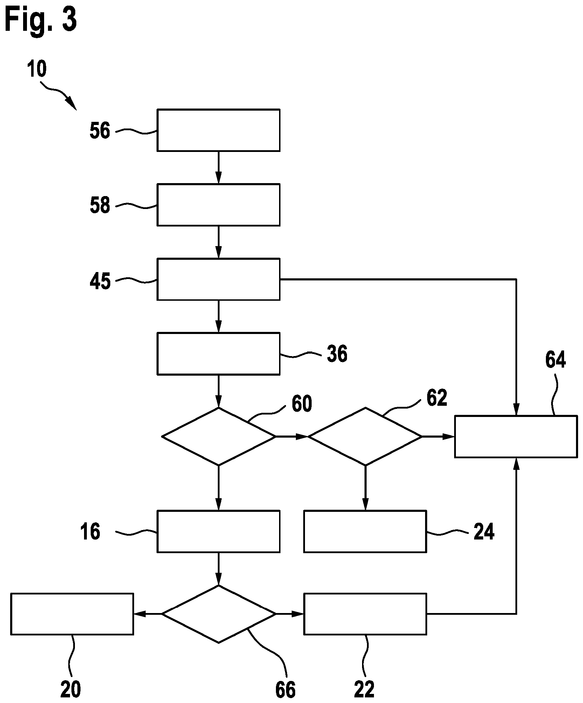

Figur 3 zeigt ein Flussdiagramm des Betriebsüberwachungsverfahrens 10. Vorzugsweise wird während eines laufenden Betriebs 56 der technischen Anlage 12 zumindest ein aktueller Betriebsparameter erfasst. Vorzugweise werden zumindest zwei Betriebsparameter erfasst. Besonderes bevorzugt wird zu einem Betriebsparameter zusätzlich ein Zeitparameter t1 bis t11 erfasst. Die Erfassung der Betriebsparameter kann von einer Sensoreinheit des Betriebsüberwachungssystems 38, von einer weiteren Funktionseinheit der technischen Anlage 12 und/oder von externen Einheiten, insbesondere zur Erfassung von standortspezifischen Parametern, durchgeführt werden. Vorzugsweise werden die Betriebsparameter sequentiell, insbesondere ausgelöst durch eine Änderung eines Betriebsparameters und/oder eines Betriebszustands, erfasst. Alternativ werden die Betriebsparameter nachträglich in einem Vorverarbeitungsschritt 58 anhand eines Ordnungsparameters, insbesondere eines Zeitparameters t1 bis t11, zu der Sequenz zusammengestellt. Insbesondere beschreibt die Sequenz eine Entwicklung, insbesondere eine Reihenfolge von angenommenen Werten, zumindest eines Betriebsparameters während eines Betriebsablaufs. In zumindest einem Verfahrensschritt wird eine Sequenz der zumindest zwei erfassten Betriebsparameter, insbesondere von Betriebszustandsidentifizierungsgrößen eines durchlaufenen Betriebszustands, zu einem Analyseparameter, insbesondere zu einer Erfassung eines Betriebsablaufs der Thermoanlage, verarbeitet. Beispielsweise wird in einer Analyse 45 eine Häufigkeit, insbesondere eine Häufigkeitsverteilung, mit der ein Wert eines Betriebsparameters in der Sequenz vorkommt ermittelt. Beispielsweise wird in einer Analyse 45 eine Gesamtzeitdauer während eines Betriebsablaufs über die ein bestimmter Wert eines Betriebsparameters angenommen wird ermittelt. Beispielsweise wird in einer Analyse 45 eine Wahrscheinlichkeit ermittelt, dass nachfolgend und/oder vorrausgehend auf einen bestimmten Wert eines Betriebsparameters, ein anderer bestimmter Wert eines Betriebsparameters angenommen wird. Vorzugsweise findet eine Analyse 45 zumindest nach jedem Betriebszyklus statt. Es ist aber auch vorstellbar, dass eine Analyse 45 in regelmäßigen Zeitabständen durchgeführt wird. Alternativ können die Betriebsparameter auch mittels eines Datenstroms in Sequenzblöcken, die einen Betriebszyklus zumindest teilweise beschreiben, insbesondere nur einzelne Betriebsparameter enthalten, quasi-kontinuierlich, d.h. entsprechend einer Daten-übertragungsrate und/oder einer Betriebsparametererfassungsrate, analysiert werden. In zumindest einem Verfahrensschritt findet anhand eines Analyseparameters, insbesondere mittels einer maschinellen Lerneinheit 34, eine Bewertung 36 der Sequenz der zumindest zwei Betriebsparameter bezüglich einer Regularität des Betriebs statt. Insbesondere wird für eine Bewertung 36 der Sequenz eine zeitliche Veränderung, insbesondere ein Trend, eines Analyseparameters, ein Überschreiten eines Schwellenwerts durch einen Analyseparameter und/oder eine unzulässige Abweichung von einem Mittelwert eines Analyseparameters ermittelt. Insbesondere wird die Sequenz nach der Bewertung 36 in eine der Bewertungskategorien regulär oder irregulär eingeordnet.

Vorzugsweise wird nach einer Kategorisierung 60 als regulär eine Statusabfrage 62 über einen Status der technischen Anlage 12, insbesondere einer Steuereinheit der technischen Anlage 12, durchgeführt. Meldet die technische Anlage 12, insbesondere die Steuereinheit, ebenfalls einen regulären Betriebsablauf, wird vorzugsweise eine Erzeugung zumindest einer Steuergröße 24 durchgeführt, um insbesondere das Erfolgsausgabeelement 50 anzusteuern und eine Information über einen erfolgreichen Betriebsablauf auszugeben. Vorzugsweise wird ein in der Speichereinheit 46 hinterlegter Zähler für die reguläre Sequenz um eins erhöht. Antwortet die technische Anlage 12, insbesondere die Steuereinheit, in der Statusabfrage 62 mit einer Fehlermeldung, wird vorzugsweise eine Lernphase 64 der Prognoseeinheit 14, insbesondere der maschinellen Recheneinheit 34, aktiviert, um eine Bewertungsregel für die Bewertung 36, insbesondere anhand der Sequenz und/oder anhand der Fehlermeldung, anzupassen. Insbesondere wird zumindest basierend auf den zumindest zwei erfassten Betriebsparametern zumindest ein technischer Schwellenwert bestimmt.

Vorzugsweise wird nach einer Kategorisierung 60 als irregulär ein in der Speichereinheit 46 hinterlegter Zähler für die irreguläre Sequenz um eins erhöht. Insbesondere ist es auch denkbar, dass die irreguläre Sequenz in der Speichereinheit 46, insbesondere als spätere Referenz, hinterlegt wird. Vorzugsweise wird zumindest bei einem Überschreiten einer bestimmten Anzahl an irregulären Sequenzen, insbesondere relativ zu einer Anzahl an regulären Sequenzen, eine Fehlerdiagnose gestartet. Insbesondere kann die Fehlerdiagnose bei jeder als irregulär bewerteten Sequenz durchgeführt werden. Vorzugweise besteht die Fehlerdiagnose aus einer Zuordnung 16 einer und/oder mehrerer Funktionseinheiten der technischen Anlage 12 zu der irregulären Sequenz. Besonders bevorzugt wird die irreguläre Sequenz in Untersequenzen zerteilt. Bevorzugt werden die Untersequenzen bezüglich einer Regularität bewertet. Insbesondere wird nach einer irregulären Untersequenz gesucht. In zumindest einem Verfahrensschritt werden den Untersequenzen einer Sequenz zumindest zwei verschiedenen Funktionseinheiten der technischen Anlage 12 zugeordnet. Bevorzugt wird einer irreguläre Untersequenz eine Funktionseinheit, insbesondere als Fehlerquelle, zugeordnet. Alternativ und/oder zusätzlich wird anhand einer regulären Untersequenz zumindest eine Funktionseinheit als Fehlerquelle ausgeschlossen. Insbesondere wird nach dem Verfahrensschritt abhängig von einer dadurch bedingten Zuordnung 16 zumindest eine Steuergröße ausgegeben. War mittels der Prognoseeinheit 14, insbesondere mittels der maschinellen Lerneinheit 34, eine Fehlerbestimmung 66 erfolgreich, insbesondere eindeutig, wird vorzugsweise eine Erzeugung zumindest einer Steuergröße 20 durchgeführt. Insbesondere wird die Erzeugung der Steuergröße 20 durchgeführt, um Gegenmaßnahmen zu veranlassen. Vorzugsweise wird zumindest das Fehlerausgabeelement 52 und/oder das Ausgabeelement 54 angesteuert, insbesondere zu einer Ausgabe einer Information über den irregulären Betrieb, insbesondere einen Zukunftsparameter, und/oder die möglichen, insbesondere die wahrscheinlichsten, verantwortlichen Funktionseinheiten. Vorzugsweise wird der Zukunftsparameter anhand des Zählers für irreguläre und reguläre Sequenzen und/oder anhand von in der Speichereinheit 46 hinterlegten historischen Sequenzen, Betriebsparametern und/oder Analyseparametern ermittelt. Beispielsweise beschreibt der Zukunftsparameter eine zu erwartende Restlebenszeit der Funktionseinheit, und/oder einen zu erwartenden Effektivitäts- und/oder Effizienzrückgang der technischen Anlage 12. Alternativ und/oder zusätzlich kann die Erzeugung der Steuergröße 20 dazu vorgesehen sein, eine Funktionseinheit, insbesondere die der irregulären Sequenz zugeordnete Funktionseinheit, zu steuern und/oder zu regeln, insbesondere einen Betrieb der Funktionseinheit zu korrigieren. Es ist auch denkbar, dass eine weitere Funktionseinheit gesteuert und/oder geregelt wird, um eine mangelhafte Funktionsweise der, der irregulären Sequenz zugeordneten, Funktionseinheit zu kompensieren und/oder um einen Betrieb der technischen Anlage 12 zu drosseln um, insbesondere weiteren, Schaden zu verhindern.

War mittels der Prognoseeinheit 14, insbesondere mittels der maschinellen Lerneinheit 34, eine Fehlerbestimmung 66 erfolglos, wird vorzugsweise eine Erzeugung zumindest einer Steuergröße 22 durchgeführt. Vorzugsweise ist die Erzeugung der Steuergröße 22 dazu vorgesehen, eine Identifizierung eines Fehlers von einer externen Quelle abzufragen. Vorzugsweise wird insbesondere die Benutzerschnittstelle 48 zu einer Benutzereingabe und/oder eine Kommunikationseinheit zu einer Abfrage von einer externen Datenbank und/oder einer weiteren Prognoseeinheit 14 angesteuert. Zusätzlich und/oder alternativ ist die Erzeugung der Steuergröße 22 dazu vorgesehen, dass Fehlerausgabeelement 52, insbesondere zu einer Ausgabe einer Information über den irregulären Betrieb, anzusteuern. Kann eine externe Quelle einen Fehler identifizieren, wird vorzugsweise die Lernphase 64 der Prognoseeinheit 14, insbesondere der maschinellen Lerneinheit 34, aktiviert. Insbesondere wird in der Lernphase 64 eine Zuordnung der als irregulär erkannten Untersequenz zu einer von der externen Quelle abgefragten Funktionseinheit durchgeführt. Insbesondere werden zumindest zwei Funktionseinheiten der technischen Anlage, insbesondere der Thermoanlage, unterschiedliche Untersequenzen zugeordnet. Vorzugsweise wird in der Lernphase 64 zumindest ein erfasster weiterer Betriebsparameter einer der weiteren, insbesondere baugleichen, technischen Anlagen 26, 28, 30 verarbeitet. Vorzugsweise wird der zumindest eine erfasste weitere Betriebsparameter über das Datennetzwerk 32 ausgetauscht. Vorzugsweise wird der zumindest eine erfasste weitere Betriebsparameter genutzt, um die Bewertung 36 der Sequenz auf eine breite Datengrundlage zu stützen. Insbesondere wird zumindest basierend auf den zumindest zwei erfassten Betriebsparametern zusammen mit dem erfassten weiteren Betriebsparameter zumindest ein technischer Schwellenwert bestimmt. Insbesondere ist die Verarbeitung des erfassten weiteren Betriebsparameters zur Erzeugung zumindest einer Steuergröße 20, 22, 24 für eine Funktionseinheit der technischen Anlage 12 vorgesehen.

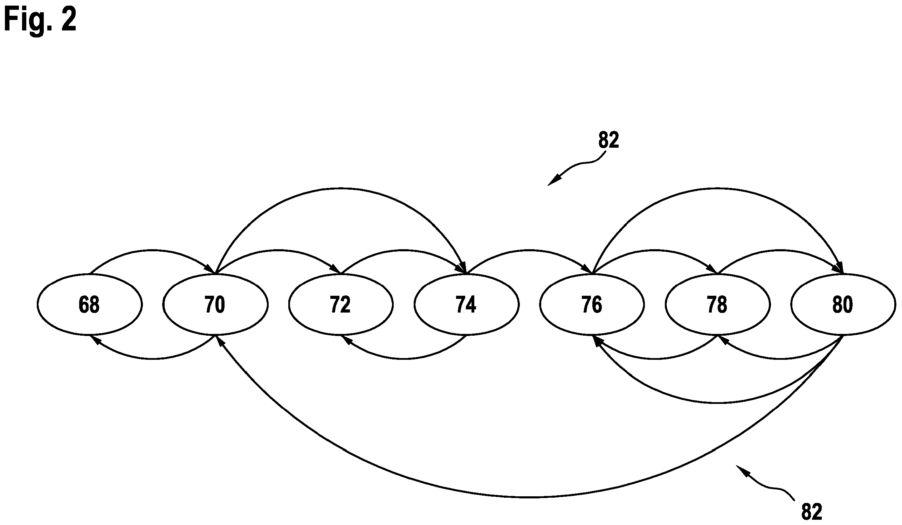

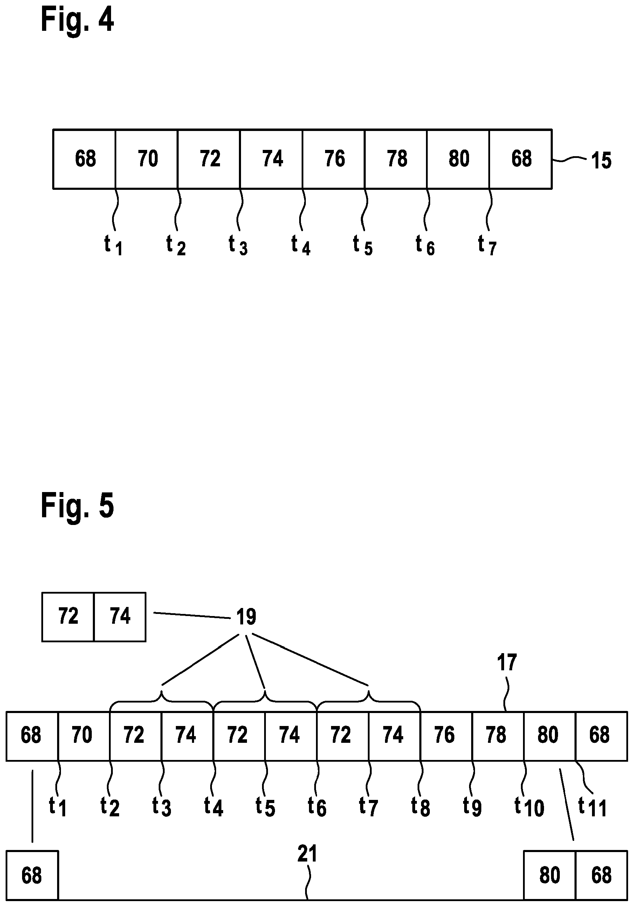

Figur 2 zeigt zu einer Veranschaulichung ein Zustandsdiagramm der als Thermoanlage, insbesondere als Durchlauferhitzer, ausgebildeten technischen Anlage 12. Insbesondere durchläuft die Thermoanlage aufgrund des Betriebsprogramms zumindest zwei Betriebszustände. Vorzugsweise weist die Thermoanlage zumindest einen Wartezustand 68 auf, in welchem vorzugsweise eine Aktivierung, insbesondere durch einen Benutzer, abgewartet wird. Bevorzugt weist die Thermoanlage zumindest einen Lüfterbetriebszustand 70 auf, in welchem zumindest der Lüfter aktiv ist. Bevorzugt weist die Thermoanlage einen Belüftungsbetriebszustand 72 auf, in welchem zumindest der Lüfter aktiv ist und das Gasventil geöffnet ist. Bevorzugt weist die Thermoanlage zumindest einen Zündversuchbetriebszustand 74 auf, in welchem zumindest der Lüfter aktiv ist, das Gasventil geöffnet ist und die Zündeinheit aktiv ist. Vorzugsweise weist die Thermoanalage zumindest einen Entzündungsbetriebszustand 76 auf, in welchem zumindest der Lüfter aktiv ist, das Gasventil geöffnet ist, die Zündeinheit aktiv ist und eine Flamme, insbesondere erstmals, detektiert wird. Vorzugsweise weist die Thermoanlage zumindest einen Brennbetriebszustand 78 auf, in welchem zumindest der Lüfter aktiv ist, das Gasventil geöffnet ist und eine Flamme detektiert wird und insbesondere die Zündeinheit deaktiviert ist. Vorzugsweise weist die Thermoanlage einen Abkühlbetriebszustand 80 auf, in welchem der Lüfter aktiv ist und keine Flamme detektiert wird und insbesondere das Gasventil geschlossen ist. Vorzugsweise steuert das Betriebsprogramm Übergänge 82, insbesondere die Reihenfolge von Übergängen 82, zwischen den Betriebszuständen. Insbesondere weisen typische Betriebsprogramme für Thermoanlagen Verzweigungen, insbesondere Fehlerbehandlungsroutinen auf, beispielsweise wiederholte Zündversuche nach einer erfolglosen Flammendetektion und/oder ein vorübergehende Abschaltung der Gaszufuhr bei einem Überschreiten eines Temperaturschwellenwerts. Vorzugsweise wird in dem Betriebsüberwachungsverfahren 10 bei zumindest einem, vorzugsweise bei jedem, der durch das Betriebsprogramm gesteuerten Übergänge 82 zumindest ein Betriebsparameter erfasst und/oder von der Steuereinheit an das Betriebsüberwachungssystem 38 übermittelt. Insbesondere wird zu einem erfassten Betriebsparameter zumindest ein Zeitparameter t1 bis t11, beispielsweise eine Systemzeit der Steuereinheit während der Erfassung des Betriebsparameters, erfasst. Vorzugsweise werden die erfassten Betriebsparameter und die Zeitparameter zu einer Sequenz zusammengefasst. In den Figuren 4 und 5 sind als Beispiele für Sequenzen eine Standardsequenz 15 und eine weitere Standardsequenz 17 dargestellt. Vorzugsweise wird als Betriebsparameter zumindest eine Betriebszustandsidentifikationsgröße erfasst, insbesondere zu einer eindeutigen Identifizierung eines Betriebszustandes. Vorzugsweise kann anhand der erfassten Betriebsparameter und insbesondere der Zeitparameter t1 bis t11, ein Betriebsablauf, insbesondere eine durch das Betriebsprogramm gesteuerte Abfolge der Betriebszustände, mittels der Prognoseeinheit 14 rekonstruiert werden. Insbesondere können als Betriebsparameter, vorzugsweise zusätzlich zur Betriebszustandsidentifikationsgröße, beispielsweise eine Gaszufuhrmenge, eine Flammentemperatur, eine Abgaszusammensetzung, eine elektrische Leistungsaufnahme, eine Rotationsgeschwindigkeit des Lüfters oder dergleichen erfasst werden. Insbesondere wird während einer Analyse 45 zumindest eine Reihenfolge der Betriebszustände ermittelt. Insbesondere wird während der Analyse 45 zumindest eine Gesamtzeitdauer ermittelt, in welcher sich die Thermoanlage in einem bestimmten Betriebszustand aufgehalten hat. Vorzugsweise wird die Anzahl an unterschiedlichen durchlaufenen Betriebszuständen gezählt. Bevorzugt wird die Anzahl ermittelt, wie oft ein bestimmter Betriebszustand durchlaufen wurde. Insbesondere wird der in der Analyse 45 ermittelte Analyseparameter während einer Bewertung 36 auf eine Abweichung von einem historischen Wert, insbesondere auf einen Trend zu einer größer werdenden Abweichung, hin und/oder auf das Überschreiten eines Schwellenwerts hin untersucht. Erfindungsgemäß wird bei einem Überschreiten eines Schwellenwerts und/oder bei einer festgestellten zeitlichen Veränderung einer der Analyseparameter, insbesondere von der maschinellen Lerneinheit 34, eine Sequenz der Betriebszustände, auf auffällige Muster, auf als fehlerhaft bekannte und/oder auf als regulär bekannte untersucht. Beispielsweise wird anhand einer ermittelten größer werdende Anzahl an Startsequenzen zur Flammenbildung, insbesondere den Lüfterbetriebszustand 70, den Belüftungsbetriebszustand 72, den Zündversuchbetriebszustand 74 und/oder den Entzündungsbetriebszustand 76 umfassend, insbesondere relativ zu einer Anzahl der anderen Betriebszustände, die Erzeugung der Steuergröße 20 durchgeführt, um insbesondere über die Ausgabe einen Zukunftsparameter zumindest auf einen Trend hinzuweisen, der möglicherweise auf einen Anlagefehler zuläuft, und insbesondere eine Gegenmaßnahme, beispielsweise den Austausch eines bestimmten Verschleißteils, vorzuschlagen und/oder automatisch zu veranlassen.

Die in Figur 4 gezeigte Standardsequenz 15 zeigt einen typischen Betriebsablauf der Thermoanlage. Die einzelnen Sequenzelemente umfassen zumindest einen Betriebsparameter, insbesondere eine Betriebszustandsidentifikationsgröße. Vorzugsweise umfasst die Standardsequenz 15 zusätzlich die Zeitparameter t1 bis t7, die insbesondere jeweils einen Zeitpunkt eines Zustandsübergangs bezeichnen. Insbesondere ist die Standardsequenz 15 zumindest eine reguläre Reihenfolge von Betriebszuständen. Insbesondere hängt eine Regularität der Standardsequenz 15 zusätzlich von den konkreten Werten der Zeitparameter t1 bis t7 ab. Beispielsweise wird anhand einer ermittelten größer werdenden Gesamtzeit (t2-t1) für den Lüfterbetriebszustand 70, insbesondere relativ zu einer Gesamtzeit der anderen Betriebszustände, die Erzeugung der Steuergröße 20 durchgeführt, um als Zukunftsparameter insbesondere eine mögliche Abnutzung des Lüfters auszugeben. Beispielsweise wird anhand einer ermittelten größer werdenden Gesamtzeit (t3-t2) für den Belüftungsbetriebszustand 72, insbesondere relativ zu einer Gesamtzeit der anderen Betriebszustände, die Erzeugung der Steuergröße 20 durchgeführt, um insbesondere als Zukunftsparameter eine mögliche Abnutzung des Gasventils auszugeben. Beispielsweise wird anhand einer ermittelten größer werdenden Gesamtzeit (t4-t3) für den Zündversuchbetriebszustand 74, insbesondere relativ zu einer Gesamtzeit der anderen Betriebszustände, die Erzeugung der Steuergröße 20 durchgeführt, um als Zukunftsparameter insbesondere eine mögliche Abnutzung der Zündeinheit, insbesondere einer Zündelektrode, auszugeben. Beispielsweise wird anhand einer ermittelten kleiner werdenden Gesamtzeit (t6-t5) für den Brennbetriebszustand 78, insbesondere relativ zu einer Gesamtzeit der anderen Betriebszustände, die Erzeugung der Steuergröße 20 durchgeführt, um als Zukunftsparameter insbesondere einen Hinweis auf eine instabile Verbrennung und/oder eine zunehmende Verschmutzung der Brennkammer auszugeben.

Die in Figur 5 gezeigte weitere Standardsequenz 17 zeigt einen weiteren typischen Betriebsablauf der Thermoanlage. Die weitere Standardsequenz 17 weist eine Zündversuchuntersequenz 19 und eine Start-Stopp-Untersequenz 21 auf. Insbesondere besteht die Start-Stopp-Untersequenz 21 aus unzusammenhängenden Sequenzelementen. Insbesondere kann an der Start-Stopp-Untersequenz 21 ein Startpunkt und ein Endpunkt eines Betriebsablaufs erkannt werden. Insbesondere beschreibt die Zündversuchuntersequenz 19 einen Zündversuch der Thermoanlage. Beispielsweise werden in dem durch die weitere Standardsequenz 17 dargestellten Betriebsverlauf drei Zündversuche benötigt, bevor eine Flamme detektiert werden kann. Zumindest abhängig von einem Schwellenwert für die zulässige Anzahl an Zündversuchen wird die weitere Standardsequenz 17 als regulär oder als irregulär eingestuft. Bevorzugt stellt die Prognoseeinheit 14 einen Trend der Thermoanlage zu im Durchschnitt mehr Zündversuchen pro Betriebsablauf fest und bewertet die weitere Standardsequenz 17 als irregulär, insbesondere bevor der Schwellenwert für die zulässige Anzahl an Zündversuchen erreicht wird. Vorzugsweise gibt die Prognoseeinheit 14 den Trend und/oder eine aus dem Trend abgleitete Größe als Zukunftsparameter aus.

## Patentansprüche

1. Betriebsüberwachungsverfahren (10) zur Überwachung einer technischen Anlage (12), insbesondere einer Thermoanlage, bei dem mittels einer Prognoseeinheit (14), die dazu vorgesehen ist, einen Zukunftsparameter, welcher einen in der Zukunft liegenden zu erwartenden Betrieb der technischen Anlage (12) charakterisiert und/oder beschreibt, zu berechnen, in zumindest einem Verfahrensschritt zumindest zwei erfasste Betriebsparameter zur Ermittlung des Zukunftsparameters verarbeitet werden, wobei in zumindest einem Verfahrensschritt eine Sequenz der zumindest zwei erfassten Betriebsparameter als ein Datenstrang über eine zeitliche Reihenfolge von durchlaufenen Betriebszuständen der technischen Anlage, insbesondere der Thermoanlage, ausgebildet wird, wobei in zumindest einem Verfahrensschritt die Reihenfolge der Betriebszustände zu einem Analyseparameter, welcher eine Kenngröße und/oder Kennzahl der Sequenz ist, verarbeitet wird, wobei in zumindest einem Verfahrensschritt zumindest eine von einem zeitlichen Verlauf des aus der Reihenfolge der Betriebszustände gewonnenen Analyseparameters abhängige Steuergröße (20, 22, 24) ausgegeben wird, **dadurch gekennzeichnet, dass** in zumindest einem Verfahrensschritt zuvor festgelegte Untersequenzen der Reihenfolge der Betriebszustände zumindest zwei verschiedenen Funktionseinheiten der technischen Anlage (12), insbesondere der Thermoanlage, zugeordnet werden und abhängig von einer der dadurch bedingten Zuordnungen (16) die zumindest eine Steuergröße (20, 22) ausgegeben wird.

2. Betriebsüberwachungsverfahren (10) nach Anspruch 1, **dadurch gekennzeichnet, dass** in zumindest einem Verfahrensschritt eine Übermittlung der zumindest zwei erfassten Betriebsparameter über ein Datennetzwerk (32), insbesondere zu einer Auswertung der zumindest zwei erfassten Betriebsparameter, erfolgt.

3. Betriebsüberwachungsverfahren (10) nach einem der vorhergehenden Ansprüche, **dadurch gekennzeichnet, dass** in zumindest einem Verfahrensschritt zumindest zur Erzeugung der zumindest einen Steuergröße (20, 22, 24) für eine Funktionseinheit der technischen Anlage (12), insbesondere der Thermoanlage, ein erfasster weiterer Betriebsparameter einer weiteren, insbesondere baugleichen, technischen Anlage (26, 28, 30) verarbeitet wird.

4. Betriebsüberwachungsverfahren (10) nach Anspruch 3, **dadurch gekennzeichnet, dass** in zumindest einem Verfahrensschritt zumindest der erfasste weitere Betriebsparameter über ein Datennetzwerk (32) ausgetauscht wird.

5. Betriebsüberwachungsverfahren (10) nach einem der vorhergehenden Ansprüche, **dadurch gekennzeichnet, dass** in zumindest einem Verfahrensschritt anhand des Analyseparameters, insbesondere mittels einer maschinellen Lerneinheit (34), eine Bewertung (36) die Reihenfolge der Betriebszustände bezüglich einer Regularität des Betriebs stattfindet.

6. Betriebsüberwachungsverfahren (10) nach einem der vorhergehenden Ansprüche, **dadurch gekennzeichnet, dass** in zumindest einem Verfahrensschritt zumindest basierend auf den zumindest zwei erfassten Betriebsparametern zumindest ein technischer Schwellenwert bestimmt wird.

7. Betriebsüberwachungsverfahren (10) nach einem der vorhergehenden Ansprüche, **dadurch gekennzeichnet, dass** in zumindest einem Verfahrensschritt zumindest zwei Funktionseinheiten der technischen Anlage (12), insbesondere der Thermoanlage, unterschiedliche Untersequenzen zugeordnet werden.

## Claims

1. Operation monitoring method (10) for monitoring a technical system (12), in particular a thermal system, in which, by means of a forecasting unit (14) which is intended for calculating a future parameter which characterizes and/or describes operation of the technical system (12) to be expected in the future, in at least one method step at least two detected operating parameters for determining the future parameter are processed, wherein in at least one method step a sequence of the at least two detected operating parameters is formed as a data string over a time sequence of operating states completed by the technical system, in particular the thermal system, wherein in at least one method step the sequence of the operating states is processed to form an analysis parameter, which is a characteristic variable and/or a code number of the sequence, wherein in at least one method step at least one controlling variable (20, 22, 24) dependent on a variation over time of the analysis parameter obtained from the sequence of operating states is output, **characterized in that** in at least one method step predefined subsequences of the sequence of operating states are assigned to at least two different functional units of the technical system (12), in particular the thermal system, and, depending on one of the assignments (16) thereby brought about, the at least one controlling variable (20, 22) is output.

2. Operation monitoring method (10) according to Claim 1, **characterized in that** in at least one method step a transmission of the at least two detected operating parameters takes place over a data network (32), in particular for an evaluation of the at least two detected operating parameters.

3. Operation monitoring method (10) according to one of the preceding claims, **characterized in that** in at least one method step at least for generating the at least one controlling variable (20, 22, 24) for a functional unit of the technical system (12), in particular the thermal system, a detected further operating parameter of a further technical system (26, 28, 30), in particular a system of the same type, is processed.

4. Operation monitoring method (10) according to Claim 3, **characterized in that** in at least one method step at least the detected further operating parameter is exchanged over a data network (32).

5. Operation monitoring method (10) according to one of the preceding claims, **characterized in that** in at least one method step a rating (36) of the sequence of the operating states with respect to a regularity of the operation takes place on the basis of the analysis parameter, in particular by means of a machine learning unit (34).

6. Operation monitoring method (10) according to one of the preceding claims, **characterized in that** in at least one method step at least one technical threshold value is determined, at least on the basis of the at least two detected operating parameters.

7. Operation monitoring method (10) according to one of the preceding claims, **characterized in that** in at least one method step at least two functional units of the technical system (12), in particular the thermal system, are assigned different subsequences.

## Revendications

1. Procédé de surveillance de fonctionnement (10) destiné à surveiller une installation technique (12), notamment une installation thermique, procédé dans lequel, au moyen d'une unité de pronostic (14) qui est prévue pour calculer un paramètre futur qui caractérise et/ou décrit le fonctionnement futur attendu de l'installation technique (12), au moins deux paramètres de fonctionnement détectés sont traités dans au moins une étape de procédé pour déterminer le paramètre futur, une séquence des au moins deux paramètres de fonctionnement détectés étant formée dans au moins une étape de procédé comme une chaîne de données sur une séquence chronologique d'états de fonctionnement parcourus de l'installation technique, en particulier de l'installation thermique, la séquence d'états de fonctionnement étant transformée dans au moins une étape de procédé en un paramètre d'analyse, qui est une grandeur caractéristique et/ou un indice de la séquence, au moins une grandeur de commande (20, 22, 24), qui dépend d'une variation dans le temps du paramètre d'analyse obtenu de la séquence d'états de fonctionnement étant délivrée dans au moins une étape de procédé, **caractérisé en ce que** des sous-séquences, définies précédemment, de la séquence d'états de fonctionnement sont associées dans au moins une étape de procédé à au moins deux unités fonctionnelles différentes de l'installation technique (12), en particulier de l'installation thermique, et l'au moins une grandeur de commande (20, 22) est délivrée en fonction de l'une des associations (16) qui en résultent.

2. Procédé de surveillance de fonctionnement (10) selon la revendication 1, **caractérisé en ce qu'**une transmission des au moins deux paramètres de fonctionnement détectés est effectuée par le biais d'un réseau de données (32) dans au moins une étape du procédé, notamment pour effectuer une évaluation des au moins deux paramètres de fonctionnement détectés.

3. Procédé de surveillance de fonctionnement (10) selon l'une des revendications précédentes, **caractérisé en ce qu'**un autre paramètre de fonctionnement détecté d'une autre installation technique (26, 28, 30), en particulier de structure identique, est traité dans au moins une étape de procédé au moins pour générer l'au moins une grandeur de commande (20, 22, 24) destinée à une unité fonctionnelle de l'installation technique (12), en particulier de l'installation thermique.

4. Procédé de surveillance de fonctionnement (10) selon la revendication 3, **caractérisé en ce qu'**au moins l'autre paramètre de fonctionnement détecté est échangé par le biais d'un réseau de données (32) dans au moins une étape du procédé.

5. Procédé de surveillance de fonctionnement (10) selon l'une des revendications précédentes, **caractérisé en ce qu'**une évaluation (36) de la séquence d'états de fonctionnement en termes de régularité du fonctionnement est effectuée dans au moins une étape de procédé sur la base du paramètre d'analyse, notamment au moyen d'une unité d'apprentissage automatique (34).

6. Procédé de surveillance de fonctionnement (10) selon l'une des revendications précédentes, **caractérisé en ce qu'**au moins une valeur de seuil technique est déterminée dans au moins une étape de procédé au moins sur la base des au moins deux paramètres de fonctionnement détectés.

7. Procédé de surveillance de fonctionnement (10) selon l'une des revendications précédentes, **caractérisé en ce que** différentes sous-séquences sont associées dans au moins une étape de procédé à au moins deux unités fonctionnelles de l'installation technique (12), notamment de l'installation thermique.
